# EUROPEAN PATENT APPLICATION

(11) **EP 4 746 271 A1**
(43) Date of publication of application: **20.05.2026**
(21) Application number: 24213061.5
(22) Date of filing: 14.11.2024
(51) Int. Cl.: H02M 1/32, H02M 1/092, G01K 11/32, G01K 11/3206, G01K 11/324, G01K 1/14, G01R 31/40

(54) **USAGE OF OPTICAL FIBERS FOR TEMPERATURE MONITORING ALONG FIBER ROUTING IN HV EQUIPMENT**

(71) Applicant: Hitachi Energy Ltd, 8050 Zürich (CH)
(72) Inventor: Hjortstam, Olof, 725 96 Västerås (SE); Gaska, Karolina, 723 58 Västerås (SE); Diaz, Oscar, 771 43 Ludvika (SE)
(74) Representative: AWA Sweden AB

(57) **Abstract**

The present disclosure relates to a high voltage, HV, equipment (100) comprising: at least one HV element (101, ... 108) configured to operate in a HV region (HV1, HV2) of said HV equipment (100); at least one optical fiber (120) installed within said HV region (HV1, HV2) configured to provide communication to said at least one HV element (101, ... 108); and at least one sensing optical fiber (110, 110a, 110n), each sensing optical fiber (110, 110a, 110n) comprising at least one temperature sensitive portion (112, 115, 119a, 119b), wherein said at least one sensing optical fiber (110, 110a, 110n) is routed together with said at least one installed optical fiber (120) into said HV region (HV1, HV2), and arranged within said HV region (HV1, HV2) so that said at least one temperature sensitive portion (112, 115, 119a, 119b) is arranged to sense temperature associated with an element of interest, said element of interest being one of said at least one HV element (101, ... 108) and at least a portion of said at least one installed optical fiber (120), said at least one sensing optical fiber (10, 10a, 10n) being optically connectable to a temperature sensing arrangement (200) for determining a temperature associated with said element of interest based on light interaction with said at least one temperature sensitive portion (112, 115, 119a, 119b) of said at least one sensing optical fiber (110, 110a, 110n). A method of installing a sensing optical fiber in a HV equipment (100) and a method of monitoring temperature in a high voltage, HV, equipment (100) by means of a temperature sensor arrangement (200) are also disclosed.

## Description

### Technical Field

The present disclosure relates to a high-voltage, HV, equipment comprising means for temperature monitoring, a method of installing said means in HV equipment, and a method of monitoring temperature in an HV equipment.

### Background

High-voltage (HV) equipment, such as converters, plays a crucial role in the transmission and distribution of electrical power across long distances and high-power systems. These devices are responsible for managing, regulating, and protecting the flow of electricity, ensuring that power is delivered reliably and efficiently to homes, businesses, and industries. However, like all electrical systems, HV equipment faces operational challenges - one of the most critical being overheating.

Overheating in HV equipment can occur due to a range of factors, including but not limited to: electrical losses, dielectric losses, polarization losses, insulation degradation, inadequate cooling, faults or short circuits. If not properly managed, overheating can lead to performance degradation, equipment failure, and even safety hazards such as fires or explosions. Effective temperature monitoring and maintenance are essential to prevent these outcomes and ensure the reliability of HV equipment.

Several challenges make temperature measurement in HV environments complex and risky. HV equipment operates at extremely high voltages, typically up to hundreds of kilovolts (kV). Directly attaching temperature sensors to such equipment is dangerous and may pose a risk of electrical shock, insulation breakdown, or even equipment failure. In addition, HV systems generate strong electromagnetic fields that can interfere with traditional electrical temperature sensors, such as thermocouples or RTDs. This interference can lead to inaccurate readings or sensor malfunction. Thus, sensors placed within HV equipment need to be properly integrated in the HV device to prevent interference with the insulation system. This adds complexity to the design and installation of measurement systems.

As an alternative, non-contact methods, such as infrared (IR) sensors or thermographic cameras, can be used to avoid direct electrical contact. However, these methods only measure surface temperatures of HV equipment, which may not accurately reflect the internal temperature of the equipment, where most of the heat is generated. Additionally, they require regular calibration and adjustment to account for factors like emissivity.

In view of the above, it is of interest to provide a solution which alleviates at least some of the problems of current temperature monitoring solutions of HV equipment.

### Summary

It is an object of the present disclosure to provide an improved solution that alleviates the mentioned drawbacks with present solutions. This and other objects which will be explicitly or implicitly indicated in the following disclosure is solved by one or more of the inventions defined in the claims. Additional advantageous embodiments are described in the following.

According to a first aspect of the present disclosure, a high voltage, HV, equipment is provided. The HV equipment comprises: at least one HV element configured to operate in a HV region of said HV equipment; at least one optical fiber installed within said HV region configured to provide communication to said at least one HV element; and at least one sensing optical fiber, each sensing optical fiber comprising at least one temperature sensitive portion, wherein said at least one sensing optical fiber is routed together with said at least one installed optical fiber into said HV region, and arranged within said HV region so that said at least one temperature sensitive portion is arranged to sense temperature associated with an element of interest, said element of interest being one of said at least one HV element and at least a portion of said at least one installed optical fiber, said at least one sensing optical fiber being optically connectable to a temperature sensing arrangement for determining a temperature associated with said element of interest based on light interaction with said at least one temperature sensitive portion of said at least one sensing optical fiber.

An HV equipment with optical fibers for sensing temperature advantageously allows temperature measurement of any specific element of interest within an HV region of said HV equipment. Further, not only does this allow for more immediate detection of temperature increases, but also allows for inferring or determining specifically which element is experiencing a temperature change. This advantageously allows for immediate feedback about what element or portion of the HV equipment is directly experiencing overheating or is subjected to heat generated by a nearby overheated element. As a result of more immediate feedback of overheating, performance degradation may be mitigated, equipment failure may be reduced, and risk of safety hazards such as fires or explosions may be reduced, preferably prevented all together.

Moreover, by routing the at least one sensing optical fiber together with the at least one installed optical fiber, the need of providing additional routing pathways into the HV region of the HV equipment is removed. Fewer routings to HV regions of the HV equipment is preferable as it reduces the risk of accidental shorts or leaks that can cause equipment malfunctions or safety hazards. It also reduces the number of areas where the HV equipment must be adapted with particularly robust insulation. As an added advantageous effect, fewer routings simplify design, making it easier to diagnose issues and perform maintenance.

In an HV equipment, optical fibers are sensitive elements for overheating since if the material jacket of optical fibers is subjected to electrical stress it might increase the risk for electrical failures. One failure mode is that dielectric material gets warm due to dielectric heating caused by leakage currents or polarization losses on or in the material jacket or by the continuous action of partial discharges. Such heating could lead to thermal runaway, internal treeing by increased leakage current flow, melting of polymeric materials and in worst case fire. Contamination by accumulation of pollutants on material jacket outer surface as well as high humidity increases the risk for such temperature driven failures. Thus, it is highly beneficial to monitor temperature of installed optical fibers. However, due to their longitudinal length, an optical fiber typically experiences temperature increase only locally, which can go unnoticed if the optical fiber is being temperature monitored at a different location. Because of this, it is highly advantageous to use an optical fiber to sense temperature associated with the installed optical fiber, because the sensing optical fiber can be routed along the installed optical fiber, and thus enable temperature sensing along a larger portion of said installed optical fiber, thereby facilitating detection of an optical fiber affected by overheating by a nearby element even if the effect is only local.

The term "HV region" may refer to at least a space of the HV equipment or any HV elements thereof. It may be an open space. It may be an at least partly confined space. It may be a substantially confined space. An HV equipment defines at least one HV region, which may include one HV region or a plurality of HV regions. Each HV region may be associated with a voltage level or a voltage level range. The voltage level or voltage level range may depend on an operating voltage of the at least one HV element of said HV region. It should therefore be understood that different HV regions may be associated with different voltage levels or different voltage level ranges. Therefore, proper insulation between different HV regions is preferable, and may even be critical depending on the voltage difference between the different HV regions. Since the sensing optical fibers can be routed into HV regions with at least one other installed optical fiber, negative impact on insulation integrity is avoided.

High voltage, HV, typically refers to voltages exceeding voltage level for residential and/or commercial use, each of which depend on region of use. As a non-limiting example, the International Electrotechnical Commission, IEC, typically considers AC voltages of 1000 V or more and DC voltages of 1500 V or more to be high voltage.

Generally, an optical fiber is a thin, generally flexible strand of glass or plastic designed to transmit light signals over distance. The optical fiber comprises a core, which is a central part of the fiber, typically made of glass or plastic, where light signals are transmitted. The core diameter of the optical fiber affects the fiber's mode of transmission and signal quality. The optical fiber further comprises a cladding, which is a layer surrounding the core, made of a material with a lower refractive index than the core. This difference in refractive indices is essential because it ensures that light traveling through the core is reflected into it, whenever it encounters the boundary with the cladding, provided it hits at the correct angles (above the critical angle for total internal reflection). Thus, the cladding reflects light back into the core, allowing for a greater degree of total internal reflection and confining light within the core to a greater degree. The optical fiber may comprise a coating, or a buffer coating, which is a protective layer around the cladding, usually made of polymer, that protects the fiber from physical damage and moisture. The optical fiber may include a strengthening layer for increasing the optical fiber's durability and prevent breakage. As a non-limiting example, said strengthening layer may be a Kevlar-layer or a layer comprising Kevlar. The optical fiber may comprise an outer jacket, which may also be referred to as a material jacket, which is a final protective layer shielding the optical fiber from environmental factors such as temperature changes, abrasion, and external impact. The material jacket comprises a material composition based on one or more materials. The material jacket may include at least one material layer. As a non-limiting example, the material jacket may be made of polymeric or rubber material. In addition, the optical fiber includes at least one optical fiber connector attached at one end of the optical fiber to allow the optical fiber to connect to other devices.

At least one installed optical fiber may comprise one installed optical fiber, or two or more installed optical fibers. The latter may be referred to as a bundle of installed optical fibers. The term "installed optical fiber" refers to an optical fiber installed for the purpose of providing communication to said at least one HV element. The at least one installed optical fiber may provide communication between said at least one HV element and an external element of the HV equipment, such as a control and/or monitoring system. In other words, a first end of the at least one installed optical fiber may be located inside an HV region whereas a second end of the at least one installed optical fiber may be located outside said HV region, optionally at ground potential.

At least one sensing optical fiber may comprise one sensing optical fiber, or two or more sensing optical fibers. The latter may be referred to as a bundle of sensing optical fibers. The term "sensing optical fiber" refers to an optical fiber comprising at least one temperature sensitive portion enabling the optical fiber to sense temperature associated with at least one element of interest. The at least one sensing optical fiber routed together with said at least one installed optical fiber into said HV region may include a bundle of sensing optical fibers. The bundle of sensing optical fibers may diverge from one another to be routed with a respective installed optical fiber or diverge from installed optical fibers and be routed to an HV element within said HV region.

As a non-limiting example, a sensing optical fiber is an optical fiber adapted to at least enable sensing temperature associated with an element of interest. A sensing optical fiber enables sensing temperature associated with an element of interest by means of at least one temperature sensitive portion.

A temperature sensitive portion may refer to a portion of an optical fiber which is sensitive to temperature changes. Materials in optical fibers, especially the core and cladding, can expand or contract with temperature changes. The refractive index of the core and cladding materials can vary with temperature. Small shifts in refractive index can alter the conditions for internal reflection, thereby impacting the efficiency of light transmission. Temperature fluctuations may also affect chromatic dispersion - where different light wavelengths travel at slightly different speeds - leading to signal distortion across distance. As a non-limiting example, a temperature sensitive portion is a portion of an optical fiber that reacts to temperature in such a way that a sensor arrangement optically connected to said optical fiber can detect a certain temperature change in the actual temperature of the temperature sensitive portion with a certain level of statistical significance. As non-limiting examples, said certain temperature change may be in any one interval, or any combined interval thereof, of the following intervals: 0.01-0.1 °C, 0.2-0.3 °C, 0.3-0.4 °C, 0.4-0.5 °C, 0.5-0.6 °C, 0.6-0.7 °C, 0.7-0.8 °C, 0.8-0.9 °C, 0.9-1.0 °C, 1.0-5.0 °C, 5.0-10.0 °C, or more. As non-limiting examples, said certain level of statistical significance may be 0.05 (5%) or 0.01 (1%).

As a non-limiting example, a sensing optical fiber is an optical fiber dedicated for sensing temperature associated with an element of interest and is not used to provide communication to at least one HV element.

As an alternative non-limiting example, a sensing optical fiber is an optical fiber for sensing temperature associated with an element of interest and used to provide communication to at least one HV element of said HV region. By selecting whether to emit a communication signal or an optical temperature probing signal into the sensing optical fiber, the same optical fiber can be used for either communication or for temperature sensing. This advantageously reduces the number of optical fibers connected to an HV equipment, but may impact an optical fiber's availability to provide communication. As a non-limiting example, and depending on temperature analysis method implemented to determine said temperature, optical time division multiplexing, OTDM, may be used, wherein an OTDM device assigns each signal to a specific time slot. The device interleaves pulses from different sources and sends them sequentially into the fiber, while leaving certain time slots free during which reflected optical temperature probing signals are expected to be received based on distance to respective temperature sensitive portions along a sensing optical fiber.

In addition, by using means for separating communication signals from the optical temperature probing signal, the sensing optical fiber may carry both communication signal and the optical temperature probing signal, at least in a partially time overlapping manner. Said means may be any one of a wavelength division multiplexer coupler, an optical coupler, an optical time division multiplexer device, or a polarization beam splitter device. Wavelength division multiplexer device refers to a device configured to combine signals composed of at least one signal component of unique wavelength from separate sources into a single optical fiber. A demultiplexer device, also arranged at the same end of the multiplexer device, may then receive a reflected response and separate these signals into communication signals and the optical temperature probing signal, and determine how the optical temperature probing signal changed upon interaction with the at least one temperature sensitive portion, thereby enabling a temperature change to be deduced. As an alternative, polarization multiplexing may be used, wherein two beams with orthogonal polarization states (e.g., horizontal and vertical) into the same optical fiber, and a polarization-sensitive device at the receiving end separates the signals by polarization. The optical temperature probing signal may have a component associated with a first wavelength or a plurality of components associated with a plurality of wavelengths, wherein said first wavelength or said plurality of wavelengths are wavelengths uniquely identifiable from wavelength or wavelength intervals of optical signals for communication.

In the context of the present disclosure, "routed" refers to the physical path or arrangement through which an optical fiber is laid or organized to connect different points of interest. The at least one sensing optical fiber and the at least one installed optical fiber may be routed together at least partly, e.g., into at least one HV region, between any two HV regions, within an HV region, and/or to an HV region from ground potential. The at least one sensing optical fiber and the at least installed optical fiber may be routed together by means of a bracket structure. The at least one sensing optical fiber may be attached securely with the at least installed optical fiber at one or more positions by means of at least one fastener, such as a clip, a zip tie, or a dual interlocking strip member (e.g., Velcro tape).

Said "temperature associated with said element of interest" may be a temperature of a temperature sensitive portion closest to said element of interest. Although said temperature may be a temperature of the temperature sensitive portion rather than the element of interest, said temperature may still be regarded as being associated with said element of interest due to causal relationship, i.e., if the temperature of the element of interest increases, then due to heat transfer, the temperature of the temperature sensitive portion is impacted consequently. Alternatively, a heat transfer model modelling a relationship of temperature between a temperature sensitive portion and an element of interest may be utilized, in which case said temperature associated with said element of interest may rather refer to a temperature of said element of interest rather than a temperature of said temperature sensitive portion.

Generally, an optical signal is a type of signal that transmits information by means of light. Any optical signal described in the present disclosure may be modulated in terms of amplitude, frequency, phase, or polarization to carry information. Any optical signal described in the present disclosure may be a pulsed optical signal.

According to one embodiment, said at least one temperature sensitive portion of said at least one sensing optical fiber is arranged in contact with said element of interest or arranged at a distance from said element of interest. By being arranged in contact with said element of interest, then the heat transfer to the temperature sensitive portion may be more immediate, thus advantageously allowing for faster detection of overheating. By being arranged at a distance, then the heat transfer may be less immediate, thereby solving the eventual risk of a sensing optical fiber breaking down suddenly due to heat transfer. In this eventual case, the temperature sensing arrangement may emit a damage probing signal, whereby based on timings of a reflected signal, the temperature sensing arrangement may determine if the sensing optical signal is damaged anywhere.

According to one embodiment, at least one of said at least one sensing optical fiber is routed together with said at least one installed optical fiber within said HV region. Thereby, the at least one sensing optical fiber may be used to sense temperature of the at least one installed optical fiber, thereby advantageously allowing detection if the at least one installed optical fiber is subjected to overheating.

According to one embodiment, at least one of said at least one sensing optical fiber is routed with said at least one installed optical fiber within said HV region such that a position of said at least one sensing optical fiber varies at least partly longitudinally relative to said at least one installed optical fiber. By this, the same sensing optical fiber may be used for sensing temperature on various sides of the at least one installed optical fiber. This is particularly advantageous if the at least one installed optical fiber is a bundle of installed optical fibers for which there may be a greater temperature change among the bundle of installed optical fibers.

According to one embodiment, at least one of said at least one sensing optical fiber diverges from said at least one installed optical fiber within said HV region. The at least one sensing optical fiber may thereby advantageously be used to sense temperature of any element of interest within said HV region.

According to one embodiment, said at least one installed optical fiber is arranged to provide communication to said at least one HV element from ground potential. Said at least one sensing optical fiber may be routed into said HV region from ground potential. Said at least one sensing optical fiber may be routed together with said at least one installed fiber between said HV region and said ground potential and/or between a first HV region and a second HV region. This may advantageously simplify routing of the optical fibers, and also advantageously allow for sensing temperature of the at least one installed optical fiber outside said HV region.

According to one embodiment, said at least one sensing optical fiber comprises a plurality of temperature sensitive portions; said at least one sensing optical fiber is routed along at least a portion of said at least one installed optical fiber so that the plurality of temperature sensitive portions is arranged for sensing temperature associated with a plurality of elements of interest. Said plurality of temperature sensitive portions may be discrete portions, i.e., being separated from one another by a distance. Alternatively, said plurality of temperature sensitive portions may be contiguously arranged, i.e., forming a single continuous temperature sensitive portion.

According to one embodiment, at least one sensing optical fiber comprises a material jacket, and said material jacket comprises a material composition including at least one of, or any combination of: polypropylene, polyethylene, polyvinylidene fluoride, thermoplastic polyurethane, epoxy, polyester resin, silicon rubber.

As a non-limiting example, the core may comprise pure silica glass or fluorine-doped silica. Pure silica glass is particularly advantageous for high voltage applications due to low attenuation, and resistance to electrical interference. Fluorine-doped silica is particularly advantageous when used in combination with low-refractive-index cladding materials, which can improve the fiber's ability to handle high electric fields.

As a non-limiting example, the cladding may comprise polyimide coatings, acrylate or silicone coatings, or carbon coating. Polyamide coatings have good heat and radiation resistance, and is therefore better equipped to withstand harsh environments and high voltages. Acrylate or silicone coatings may be used in lower-voltage applications but offer flexibility. Silicone, in particular, has good dielectric properties. Carbon coating can provide extra protection from static charges and enhance durability in high-voltage conditions.

As a non-limiting example, the buffer layer and/or the outer coating may comprise high-dielectric strength polymers or metal free protective material. Materials like polyethylene or PEEK (Polyether ether ketone) offer durability and insulation for outer layers. Meanwhile, metal free protective material prevents conductive paths, often by using additional layers of polymer or glass.

As a non-limiting example, the at least one sensing optical fiber may comprise a multi-clad structure, i.e., two or more claddings with different refractive indices are provided around the core. This can provide additional structural integrity, reducing the risk of dielectric breakdown.

As a non-limiting example, the at least one sensing optical fiber comprises a structure of reinforcement fibers in a strengthening layer of said at least one sensing optical fiber. This can distribute strain and electric field effects, which improves lifespan and reliability in high-voltage settings. As a non-limiting example, said reinforcement fibers may be of any material described with reference to said strengthening layer. As a non-limiting example said reinforcement fibers may be helically wounded in said structure of reinforcement fibers.

According to one embodiment, said material jacket comprises a filler material such as a ceramic powder or a flame retardant. This may advantageously increase fire resistance and prevent spread of fire. As a non-limiting example, said filler material may also or alternatively be provided between said material jacket and the layer beneath the material jacket, e.g., the reinforcement layer or coating or buffer coating.

According to one embodiment, said material jacket has the same material composition as said element of interest. This advantageously reduces dielectric risk, i.e., the risk associated with the failure of insulating materials or systems designed to withstand high voltage. Dielectric failures can lead to electrical breakdowns, arcing, or insulation degradation, which can compromise the reliability and safety of HVDC equipment. This is particularly beneficial if the element of interest is one of said at least one installed optical fibers.

According to one embodiment, said HV equipment is a converter such as a HVDC converter, or an energy storage system, ESS, and said HV region is a region defined by the same or by a component thereof.

In the case of a converter, such as an HVDC converter, a component thereof may e.g., be a switching device, such as a semiconductor device, heat sinks, cooling systems, at least one converter valve, a smoothing reactor, filter circuits, a control system, a protection system, or an energy storage system. Switching devices can switch between on and off states to allow or block current flow as required. A converter may comprise at least one converter valve. The converter valve couples one AC transmission side to a DC side and can provide isolation between the AC and DC sides of the system, which is critical for safety and reliability. The converter valve may introduce a phase shift to reduce harmonics, which helps improve system stability. Filter circuits may be harmonic filters, DC filters, or AC filters. Converters may generate harmonics, which can interfere with nearby equipment and communication lines. Harmonic filters on both AC and DC sides mitigate these disturbances. DC filters are usually employed to manage harmonics generated on the DC line, ensuring clean power transmission. AC filters are used on the AC side to limit harmonics before they enter the power grid, maintaining power quality. The control system may provide a plurality of functions such as firing angle control, voltage and current regulation, and/or fault protection. In converters using thyristors, the firing angle (i.e., the angle at which the thyristor turns on) is controlled to regulate the amount of power converted from AC to DC. The control system maintains target voltage and current levels, ensuring that the converter operates within its limits. The control system monitors for faults and initiates protective actions, such as shutting down parts of the converter or adjusting operating parameters. The protection system may comprise components such as surge arresters, bypass switches, and/or auxiliary power supplies. Surge arresters protect the converter from transient overvoltage, typically caused by lightning strikes or switching operations. In case of converter faults or maintenance requirements, bypass switches redirect current flow to maintain system continuity. Backup power systems ensure that control and protection components continue to function even if the main power source is lost.

The converter may be a line-commutated converter (LCC) or a voltage-source converter (VCS). Line-commutated converters may use thyristors, which are turned on by applying a control pulse and turned off when current drops to zero. They require the AC network's voltage waveform to operate and are common in traditional HVDC systems. Voltage source converters use more advanced semiconductor devices like IGBTs or GTOs that can be turned on and off by a control signal. VSCs are commonly used in modern HVDC systems because they don't require a strong AC grid and offer better control over power flow. The converter may be configured to be operated into two or more modes, such as but not limited to rectifier mode and inverter mode.

The energy storage system, ESS, which may be integrated with the converter or electrically connectable thereto, stores energy for later use, allowing energy to be captured when it is abundant or inexpensive and released when it is needed. ESSs play a crucial role in balancing supply and demand in the power grid, integrating renewable energy, providing backup power, and improving overall grid reliability and efficiency. An energy storage system comprises a plurality of energy storage cells mutually arranged in various hierarchical structures, such as in strings comprising two or more energy storage modules connected in series, each energy storage module comprising at least one energy storage cell. An energy storage module may comprise two or more energy storage cells, depending on desired hierarchical structure. Two or more energy storage cells may be connected in parallel. Two or more energy storage cells may be connected in series. The energy storage cells of the energy storage system may be batteries, capacitors, super-batteries, or super-capacitors. The energy storage system may comprise a protection system for controlling various protection elements of the energy storage system. The energy storage system may comprise a cell management system for monitoring and controlling charge and discharge rate, temperature, and overall health of individual cells. The cell management system may also prevent overcharging, overheating, and undercharging to prolong life of the energy storage system. The energy storage system may comprise an energy management system, EMS. The EMS oversees the operation of the ESS, deciding when to store or release energy based on factors like energy demand, grid conditions, and market prices. In grid-connected systems, the EMS can help the grid operator in maintaining balance by discharging energy during peak demand and charging during low demand.

According to one embodiment, said HV equipment comprises a temperature sensor arrangement optically connected to said at least one sensing optical fiber, preferably at ground potential, which temperature sensor arrangement is configured to determine a temperature of said element of interest based on light interaction with said at least one temperature sensitive portion of said at least one sensing optical fiber. The temperature sensor arrangement may comprise an optical connector configured to optically connect with at least one sensing optical fiber of an HV equipment. The temperature sensor arrangement may comprise a processing unit configured to execute instructions that cause the temperature sensor arrangement to perform a set of operations at least including: emitting an optical temperature probing signal into said sensing optical fiber; measuring a response signal arising from the optical temperature probing signal being reflected or backscattered upon interacting with at least one light sensing portion of said sensing optical fiber; analyzing said response signal to determine said temperature associated with said element of interest. The processing unit may be configured to execute instructions that cause the temperature sensor arrangement to perform a further set of operations at least including: analyzing said response signal to determine at least one temperature value and a corresponding signal response time value indicating time of flight of said response signal; providing HV element information at least indicative of a signal response time value being associated with at least one HV element of interest; based on said signal response time value and said HV element information, associating said temperature value with said HV element of interest.

According to one embodiment, said temperature sensor arrangement is configured to: emit an optical temperature probing signal into said at least one sensing optical fiber; receive at least one optical response signal reflected or backscattered through said at least one sensing optical fiber upon the optical temperature probing signal interacting with at least one of said at least one temperature sensitive portion, and determine said temperature associated with said element of interest based on an analysis of said at least one optical response signal.

According to one embodiment, said temperature sensor arrangement is configured to: determine, based on HV equipment information, which particular temperature sensitive portion of said at least one temperature sensitive portion is associated with said element of interest, determine, based on a time-of-flight of said at least one optical response signal, which particular optical response signal is associated with said particular temperature sensitive portion, and determine said temperature associated with said element of interest based on an analysis of said particular optical response signal. A time-of-flight of an optical response signal may be determined as substantially half the period between the timepoint where the optical temperature probing signal is emitted and the timepoint where the optical response signal is detected. In case of emitting a plurality of optical temperature probing signals and/or detecting a plurality of optical response signals, methods of signal correlation may be applied to determine which optical temperature probing signal a detected optical response signal is associated with.

According to one embodiment, said temperature sensor arrangement is configured to determine said temperature of said element of interest based on any one of, or any combination of, the following optical temperature sensing methods: Fiber Bragg Grating, FBG, Sensing; Optical Frequency Domain Reflectometry, OFDR; Raman Distributed Temperature Sensing, RDTS.

FBG sensing involves emitting said optical temperature probing signal into a sensing optical fiber, wherein said at least temperature sensitive portion is an FBG. FBG comprises a periodic variation of the refractive index in the fiber core, and this variation reflects specific wavelengths of light while allowing others to pass through, making it a selective filter. When external conditions like temperature change, the spacing (or period) and refractive index of the grating change, shifting the reflected wavelength (Bragg wavelength). By monitoring this shift, a temperature may be determined with high precision. Advantageously, FBGs have high sensitivity, durability, and are relatively immune to electromagnetic interference. The FBG's are located at specific locations along the sensing optical fiber. Thus, with routing layout information indicating routing layout of said sensing optical fiber, a measured temperature may be associated with a particular element of interest, be it an HV element or an installed optical fiber.

OFDR is an optical measurement technique used to analyze the reflectivity and phase changes along an optical fiber. This technique relies on the principle of sweeping the frequency of a laser source across a range of wavelengths and measuring the backscattered light from the fiber. By mapping the reflections along the fiber, OFDR provides high-resolution distributed sensing of temperature. The technique offers spatially resolved data along the fiber's length, making it valuable for applications requiring detailed, distributed sensing.

RDTS leverages the Raman scattering effect, where a small fraction of light passing through a fiber is scattered due to molecular vibrations within the material. This scattered light includes two shifted wavelengths, the Stokes and anti-Stokes components, which are sensitive to temperature changes. The intensity of the anti-Stokes component changes with temperature, while the Stokes component remains relatively stable. By comparing these two signals, RDTS systems can measure temperature along the entire length of the fiber.

These optical temperature sensing methods have different advantages. FBG sensing is preferable for measuring localized temperature changes with high sensitivity and precision, and offers rapid response times and are ideal for applications where specific points along the fiber need to be monitored. However, since FBG sensors measure at discrete points along the sensing optical fiber, it is difficult to provide continuous temperature distribution along an entire temperature sensing region of the sensing optical fiber, requiring temperature to be interpolated between FBG sensors based on temperature obtained via the FBG sensors. OFDR allows for distributed sensing along the fiber with high spatial resolution, offering a continuous temperature profile over longer distances compared to FBGs alone. By integrating OFDR, the system can sense variations in temperature with high spatial resolution, giving a detailed temperature profile. OFDR requires precise calibration, and while it provides continuous distribution data, it is sensitive to external environmental factors, which may require compensations. RDTS is valuable for temperature sensing over very long distances (up to tens of kilometers) and can continuously monitor the entire length of the fiber. With RDTS, a complete temperature distribution is obtained across a large area, ideal for monitoring extensive infrastructure such as pipelines. RDTS has lower spatial resolution compared to FBG and OFDR, and it is primarily suited for temperature measurements.

Two or more of these temperature sensing methods may be combined to determine at least one temperature. As a first non-limiting example, FBG sensing may be used at critical points where high-resolution temperature data is required, and OFDR may be deployed to obtain distributed temperature data, filling in the gaps between FBG sensors. As a second non-limiting example, FBG sensing may be used at critical points where high-resolution temperature data is required and RDTS may be utilized for monitoring temperature changes along the entire length of the system, providing a broader, long-distance temperature profile. In a third non-limiting example, OFDR may be deployed to obtain distributed temperature data for distance intervals associated with an HV element of interest, and RDTS may be utilized for monitoring temperature changes along the entire length of the system, providing a broader, long-distance temperature profile. As a fourth non-limiting example, FBG sensing may be used at critical points where high-resolution temperature data is required, OFDR may be deployed to obtain distributed temperature data, filling in the gaps between FBG sensors, and RDTS may be utilized for monitoring temperature changes along the entire length of the system, providing a broader, long-distance temperature profile.

According to one embodiment, said temperature sensor arrangement is configured to: compare said temperature of said element of interest with at least one historic temperature of said element of interest to detect a temperature deviation, and/or compare said temperature with a temperature threshold for said element of interest. This advantageously enables detecting patterns which may indicate one or more elements of interest having increased risk of overheating. Moreover, it advantageously allows for compensating for changes in ambient temperature due to day cycle or seasonal change.

According to a second aspect of the disclosure, a method of installing a sensing optical fiber in a high voltage, HV, equipment including at least one HV element operating in a HV region of said HV equipment and at least one optical fiber installed within said HV region for providing communication to said at least one HV element is provided. The method comprises: arranging at least one sensing optical fiber in the HV equipment, each sensing optical fiber comprising at least one temperature sensitive portion for sensing temperature associated with an element of interest, said element of interest being one of said at least one HV element and a portion of said at least one installed optical fiber, by routing it together with said at least one installed optical fiber into said HV region, said at least one sensing optical fiber being optically connectable to a temperature sensing arrangement for determining a temperature associated with said element of interest based on light interaction with said at least one temperature sensitive portion of said at least one sensing optical fiber.

The at least one sensing optical fiber and the at least one installed optical fiber may be routed together at least partly, e.g., into at least one HV region, between any two HV regions, within an HV region, and/or to an HV region from ground potential. The at least one sensing optical fiber and the at least installed optical fiber may be routed together by means of a bracket structure. The at least one sensing optical fiber may be attached securely with the at least installed optical fiber at one or more positions by means of at least one fastener, such as a clip, a zip tie, or a dual interlocking strip member (e.g., Velcro tape).

According to a third aspect of the disclosure, a method of monitoring temperature in a high voltage, HV, equipment by means of a temperature sensor arrangement is provided. Said temperature sensor arrangement emits an optical temperature probing signal into at least one sensing optical fiber routed together with said at least one optical fiber into an HV region of said HV equipment for sensing temperature associated with an element of interest via at least one temperature sensitive portion of said at least one sensing optical fiber, said element of interest being one of at least one HV element of said HV equipment and at least a portion of said at least one installed optical fiber. Further at least one optical response signal reflected or backscattered through said at least one sensing optical fiber upon said optical temperature probing signal interacting with at least one of said at least one temperature sensitive portion is received said at least one optical response signal is analyzed to determine a temperature associated with said element of interest.

According to one embodiment, the method comprises: comparing said temperature of said element of interest with at least one historic temperature of said element of interest to detect a temperature deviation, and/or comparing said temperature with a temperature threshold for said element of interest.

According to one embodiment, said step of analyzing said at least one optical response signal is based on one of, or any combination of, the following: Fiber Bragg Grating, FBG, Sensing; Optical Frequency Domain Reflectometry, OFDR; and Raman Distributed Temperature Sensing, RDTS.

According to a fourth aspect, a temperature sensor arrangement is provided. The temperature sensor arrangement may be configured to be optically connectable to a sensing optical fiber of an HV equipment as described in any of the preceding embodiments. The temperature sensor arrangement may be configured as previously described.

According to a fifth aspect, use of an optical fiber for sensing temperature associated with at least one element of interest of an HV equipment is provided. The optical fiber may be a sensing optical fiber according to any embodiment of the present disclosure. The optical fiber may be an installed optical fiber, in accordance with any embodiment of the present disclosure. The HV equipment may be an HV equipment as described in any embodiment of the present disclosure.

According to a sixth aspect, a computer program is provided. The computer program comprises instructions which, when the program is executed by a computer, cause the computer to carry out the method according to the third aspect or any embodiments thereof.

According to a seventh aspect, a computer-readable storage medium is provided. The computer-readable storage medium comprises instructions which, when executed by a computer, cause the computer to carry out the method according to the third aspect or any embodiments thereof.

Effects and features of the second, third, fourth, fifth, sixth and seventh aspects are largely analogous to those described above in connection with the first aspect. Embodiments mentioned in relation to the first aspect are largely compatible with the second, third, fourth, fifth, sixth and seventh aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief Description of the Drawings

The invention will in the following be described in more detail with reference to the enclosed drawings, wherein:
Fig. 1 illustrates a schematic of a high voltage, HV, equipment according to one embodiment, wherein said HV equipment comprises a sensing optical fiber optically connected to a temperature sensing arrangement;
Fig. 2 illustrates a schematic of a high voltage, HV, equipment according to one embodiment, wherein said HV equipment comprises a sensing optical fiber optically connected to a temperature sensing arrangement, which sensing optical fiber comprises a plurality of temperature sensitive portions;
Fig. 3 illustrates a schematic of a high voltage, HV, equipment according to one embodiment, wherein said HV equipment comprises a plurality of sensing optical fibers optically connected to a temperature sensing arrangement;
Fig. 4 illustrates a working principle of a method of monitoring temperature in an HV equipment according to one embodiment, wherein an optical temperature probing signal is emitted into a sensing optical fiber and a response signal is reflected or backscattered from a temperature sensitive portion;
Fig. 5 schematically illustrates the layer structure of a sensing optical fiber according to one embodiment;
Fig. 6a illustrates a flow chart of a method of installing a sensing optical fiber in an HV equipment according to one embodiment; and
Fig. 6b illustrates a flow chart of a method of monitoring temperature in an HV equipment according to one embodiment.

### Description of Embodiments

Hereinafter, the principle of the present disclosure will be described with reference to the illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached drawings. Various structures, systems and devices are schematically depicted in the drawings for purposes of explanation only and to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

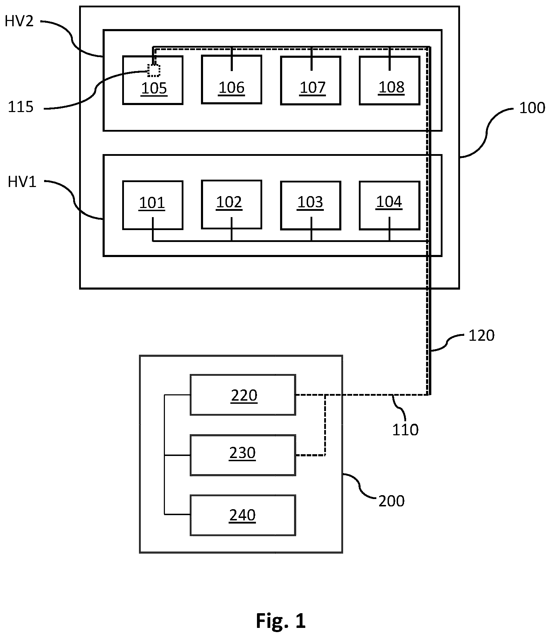

Fig. 1 schematically illustrates a high voltage, HV, equipment 100 according to one embodiment. As non-limiting examples, the HV equipment 100 may be a converter such as an HVDC converter, or an energy storage system. In the illustrated example, the HV equipment 100 defines a first HV region HV1 and a second HV region HV2. The HV equipment 100 comprises a first plurality of HV elements 101, ... 104 configured to operate in the first HV region HV1 of said HV equipment 100. The HV equipment 100 comprises a second plurality of HV elements 105, ... 108 configured to operate in the second HV region HV2 of said HV equipment 100. The HV equipment 100 comprises a bundle of optical fibers 120 (illustrated in Figs. 1-3 by continuous line) which are installed to communicate respectively with the HV elements of the first plurality of HV elements 101, ... 104 and the HV elements of the second plurality of HV elements 105, ... 108. The HV equipment 100 further comprises a sensing optical fiber 110 (illustrated in Figs. 1-3 by dashed line) which sensing optical fiber 110 comprises a temperature sensitive portion 115. The sensing optical fiber 110 is routed together with at least one installed optical fiber 120 into said first HV region HV1 and then into said second HV region HV2, and arranged in said second HV region HV2 so that said temperature sensitive portion 115 is arranged to sense temperature associated with a specific position in an HV element of interest, which element of interest is exemplified in Fig. 1 as the HV element 105. By routing the sensing optical fiber 110 with the installed optical fiber 120, negative impact on insulation integrity is advantageously reduced and/or preserved, thereby reducing the risk of electrical failures that otherwise may occur due to a separate routing pathway into HV regions HV1, HV2. As a non-limiting example, said HV element may be a cell of the (HVDC) converter. Thus, said specific position in an HV element may be a position corresponding to the position of a specific component in said HV element, such as an IGBT, a GTO, a gate unit, a capacitor, a busbar, or an insulator. Thus, it should be understood that the element of interest may be a component of an HV element.

Fig. 1 also illustrates the sensing optical fiber 110 being optically connected to a temperature sensing arrangement 200. The temperature sensing arrangement 200 allows for determining a temperature associated with the HV element 105 based on light interaction with the temperature sensitive portion 115, thereby advantageously enabling temperature monitoring of a specific position, inside or outside, of the HV element 105 and thus enabling immediate and direct information of any eventual overheating. The temperature sensor arrangement 200 is preferably connected to ground potential. The temperature sensor arrangement is configured to emit, by means of a light source 220, an optical temperature probing signal (e.g. a pulse) into the sensing optical fiber. The temperature sensor arrangement is configured to receive, by means of a light detector 230, at least one optical response signal (e.g., a response pulse) reflected or backscattered through said sensing optical fiber upon the optical temperature probing signal interacting with the temperature sensitive portion 115. The temperature sensor arrangement is configured to determine, by means of a processing unit 240, said temperature associated with the HV element 105 based on an analysis of said at least one optical response signal. The analysis may be based on Fiber Bragg Grating, FBG, Sensing; Optical Frequency Domain Reflectometry, OFDR, and/or Raman Distributed Temperature Sensing, RDTS. It should also be understood that the temperature sensing arrangement 200 may be used to monitor a temperature associated with any element of interest, such as an installed optical fiber or an HV element.

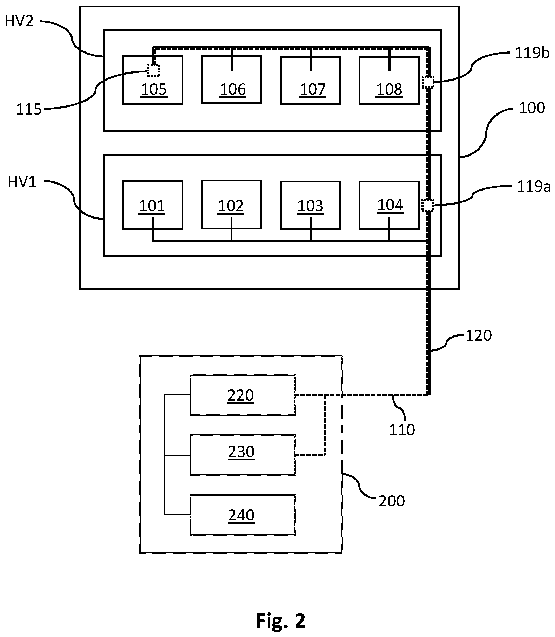

Fig. 2 schematically illustrates a high voltage, HV, equipment 100 according one embodiment. The HV equipment 100 shown in Fig. 2 differs from the HV equipment illustrated in, and described with reference to, Fig. 1 in that the sensing optical fiber 110 comprises three temperature sensitive portions. A first temperature sensitive portion 119a is arranged in said first HV region HV1. A second temperature sensitive portion 119b is arranged in said second HV region HV2. The third temperature sensitive portion 115 is arranged to sense temperature associated with the HV element 105, as described with reference to the embodiment illustrated in Fig. 1. This may result in the optical temperature probing signal giving rise to three separate optical response signals following interaction with a respective temperature sensitive portion. By analyzing time of flight of each optical response signal, the temperature determined from an analysis of each optical response signal may thus be correlated with a respective temperature sensitive portion, and thus identify source of an eventual overheating. The analysis may be based on Fiber Bragg Grating, FBG, Sensing; Optical Frequency Domain Reflectometry, OFDR, and/or Raman Distributed Temperature Sensing, RDTS.

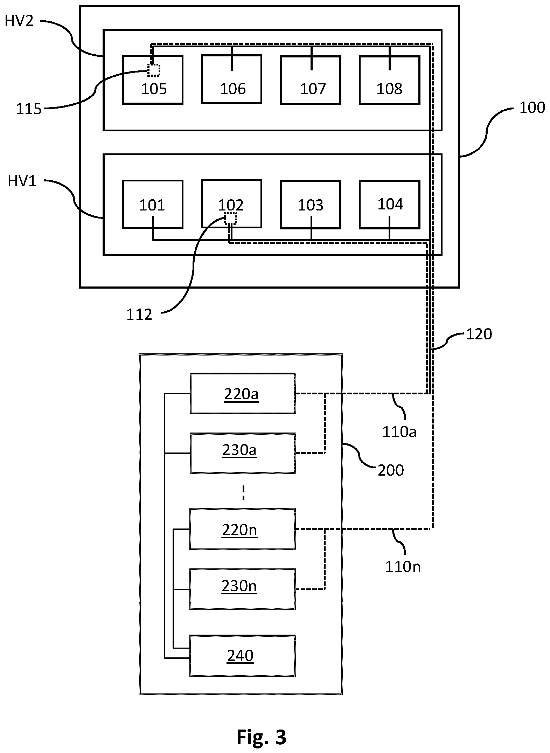

Fig. 3 schematically illustrates a high voltage, HV, equipment according to one embodiment. The HV equipment shown in Fig. 3 differs from the HV equipment 100 illustrated in, and described with reference to, Fig. 1 in that the HV equipment 100 comprises n different sensing optical fibers, wherein two sensing optical fibers 110a, 110n are illustrated, and each of the two sensing optical fibers 110a, 110n are routed to a respective HV element 102, 105 so that a temperature sensitive portion 112, 115 is arranged to sense temperature associated with said respective HV element 102, 105. Each optical fiber 110a, 110n is optically connected to the temperature sensor arrangement 200. Respective sets of light sources 220a, 230a and optical detectors 220n, 230n are optically connected to the respective sensing optical fibers 110a, 110n. For example, the sensing optical fiber 110a is optically connected to (or coupled to) the light source 220a and the optical detector 230a while the sensing optical fiber 110n is optically connected to (or coupled to) the light source 220n and the optical detector 230b.

Although not shown in Figs. 1-3, it should be understood that the at least one sensing optical fiber may comprise more than one temperature sensitive portion, for instance 2, 3, 4, 5 or more. The at least one sensing optical fiber may comprise a continuous temperature sensitive portion that extends along said at least one sensing optical fiber.

The HV equipment may comprise a plurality of sensing optical fibers, each comprising at least one temperature sensitive portion, and arranged so that the respective at least one temperature sensitive portion is arranged to sense temperature associated with any one of the HV elements 101-108.

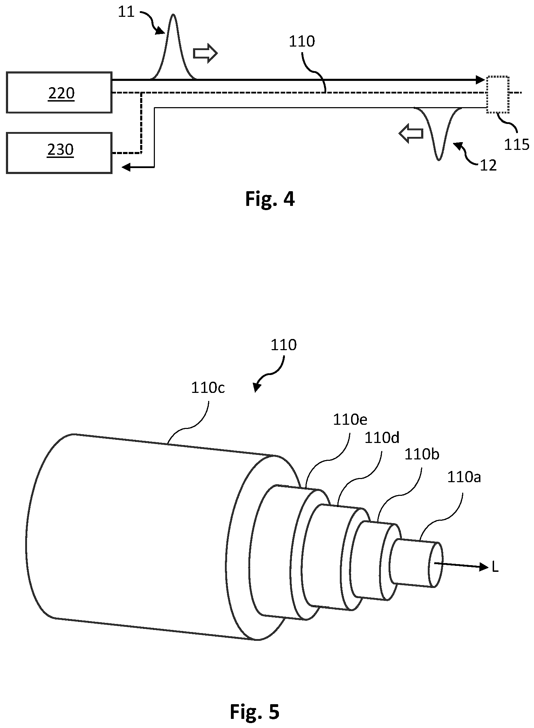

Fig. 4 illustrates a working principle of a method of monitoring temperature in an HV equipment according to one embodiment, wherein an optical temperature probing signal or pulse 11 is emitted, by means of a light source 220, into a sensing optical fiber 110 and an optical response signal 12 is reflected or backscattered from a temperature sensitive portion 115 upon the optical temperature probing signal 11 interacting with it. Characteristics of the reflection and backscattering are impacted by material properties of the sensing optical fiber 110. The optical response signal 12 (or return pulse 12) is detected at an optical detector 230. The temperature sensor arrangement may be configured to perform an analysis of the optical response signal 12. The temperature sensor arrangement may, based on said analysis, determine a temperature associated with an element of interest. The analysis may be based on Fiber Bragg Grating, FBG, Sensing; Optical Frequency Domain Reflectometry, OFDR, and/or Raman Distributed Temperature Sensing, RDTS.

Moreover, by analyzing timings of the optical response signal 12 relative the optical temperature probing signal 11, it may uniquely identify which temperature sensitive portion the optical response signal 12 interacted with. Thereby, the determined temperature may be identified with the element of interest.

Fig. 5 schematically illustrates a layer structure of a sensing optical fiber 110 according to one embodiment. The sensing optical fiber 110 extends along a longitudinal direction L and the layer structure extends in a radial direction. The sensing optical fiber 110 comprises a core 110a, which is surrounded (or embedded in), a cladding 110b, itself surrounded by a material jacket 110c. The cladding comprises a material with a lower refractive index than the core, which difference in refractive indices enables that light traveling through the core is reflected into it, so as to promote total internal reflection. As a non-limiting example, the material jacket may be made of polymeric or rubber material. The sensing optical fiber 110 may further comprise an optional coating or buffer coating 110d, which is a protective layer around the cladding, usually made of polymer, that protects the fiber from physical damage and moisture. The sensing optical fiber 110 may further comprise an optional strengthening layer 110e for increasing the optical fiber's durability and prevent breakage. In Fig. 5, the optional strengthening layer 110e surrounds the coating or buffer coating 110d. However, the order of the optional coating or buffer coating 110d and the optional strengthening layer 110e may be switched.

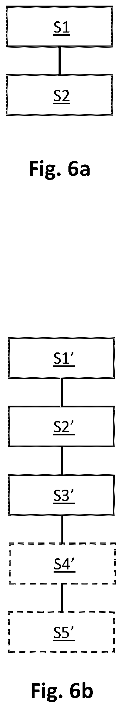

Fig. 6a illustrates a flow chart of a method of installing a sensing optical fiber in an HV equipment according to one embodiment. The method comprises: arranging S1 at least one sensing optical fiber 110, 110a, 110n in the HV equipment, each sensing optical fiber 110, 110a, 110n comprising at least one temperature sensitive portion 112, 115 for sensing temperature associated with an element of interest, said element of interest being one of at least one HV element 101, ... 108 and a portion of at least one installed optical fiber by routing S2 the sensing optical fiber together with said at least one installed optical fiber into said HV region, said at least one sensing optical fiber being optically connectable to a temperature sensing arrangement 200 for determining a temperature associated with said element of interest based on light interaction with said at least one temperature sensitive portion of said at least one sensing optical fiber. The at least one sensing optical fiber and the at least one installed optical fiber may be routed together at least partly, e.g., into at least one HV region, between any two HV regions, within an HV region, and/or to an HV region from ground potential. The at least one sensing optical fiber and the at least installed optical fiber may be routed together by means of a bracket structure. The at least one sensing optical fiber may be attached securely with the at least installed optical fiber at one or more positions by means of at least one fastener, such as a clip, a zip tie, or a dual interlocking strip member (e.g., Velcro tape).

Fig. 6b illustrates a flow chart of a method of monitoring temperature in an HV equipment according to one embodiment. Said HV equipment comprises at least one optical fiber 110 installed for communication within said HV equipment, said method comprising: transmitting S1' an optical temperature probing signal into at least one sensing optical fiber routed together with said at least one optical fiber into an HV region of said HV equipment for sensing temperature associated with an element of interest via at least one temperature sensitive portion of said at least one sensing optical fiber, said element of interest being one of at least one HV element of said HV equipment and a portion of said at least one installed optical fiber; receiving S2' at least one optical response signal reflected or backscattered through said at least one sensing optical fiber upon said optical temperature probing signal interacting with at least one of said at least one temperature sensitive portion; and analyzing S3' said at least one optical response signal to determine a temperature associated with said element of interest. The analysis may be based on Fiber Bragg Grating, FBG, Sensing; Optical Frequency Domain Reflectometry, OFDR, and/or Raman Distributed Temperature Sensing, RDTS.

The method may further comprise: comparing S4' said temperature associated with said element of interest with at least one historic temperature associated with said element of interest to detect a temperature deviation, and/or comparing S5' said temperature with a temperature threshold for said element of interest. This advantageously enables detecting patterns which may indicate one or more elements of interest having increased risk of overheating. Moreover, it advantageously allows for compensating for changes in ambient temperature due to day cycle or seasonal change.

While the foregoing is directed to embodiments of the disclosure, other and further embodiments may be devised without departing from the inventive concept discussed herein. The scope of the invention is however determined by the claims.

## Claims

1. High Voltage, HV, equipment (100) comprising:
at least one HV element (101, ... 108) configured to operate in a HV region (HV1, HV2) of said HV equipment (100);
at least one optical fiber (120) installed within said HV region (HV1, HV2) configured to provide communication to said at least one HV element (101, ... 108); and
at least one sensing optical fiber (110, 110a, 110n), each sensing optical fiber (110, 110a, 110n) comprising at least one temperature sensitive portion (112, 115, 119a, 119b),
wherein said at least one sensing optical fiber (110, 110a, 110n) is routed together with said at least one installed optical fiber (120) into said HV region (HV1, HV2), and arranged within said HV region (HV1, HV2) so that said at least one temperature sensitive portion (112, 115, 119a, 119b) is arranged to sense temperature associated with an element of interest, said element of interest being one of said at least one HV element (101, ... 108) and at least a portion of said at least one installed optical fiber (120), said at least one sensing optical fiber (110, 110a, 110n) being optically connectable to a temperature sensing arrangement (200) for determining a temperature associated with said element of interest based on light interaction with said at least one temperature sensitive portion (112, 115, 119a, 119b) of said at least one sensing optical fiber (110, 110a, 110n).

2. HV equipment (100) according to claim 1, wherein said at least one temperature sensitive portion (112, 115, 119a, 119b) of said at least one sensing optical fiber (110, 110a, 110n) is arranged in contact with said element of interest or arranged at a distance from said element of interest.

3. HV equipment (100) according to any of the preceding claims, wherein
at least one of said at least one sensing optical fiber (110, 110a, 110n) is routed together with said at least one installed optical fiber (120) within said HV region (HV1, HV2),
wherein, optionally, at least one of said at least one sensing optical fiber (110, 110a, 110) is routed with said at least one installed optical fiber (120) within said HV region (HV1, HV2) such that a position of said at least one sensing optical fiber (110, 110a, 110n) varies at least partly longitudinally relative said at last one installed optical fiber (120).

4. HV equipment (100) according to any of the preceding claims, wherein at least one of said at least one sensing optical fiber (110, 110a, 110n) diverges from said at least one installed optical fiber (120) within said HV region (HV1, HV2).

5. HV equipment (100) according to any of the preceding claims, wherein said at least one installed optical fiber (120) is arranged to provide communication to said at least one HV element (101, ... 108) from ground potential.

6. HV equipment (100) according to any of the preceding claims, wherein said at least one sensing optical fiber (110, 110a, 110n) is routed into said HV region (HV1, HV2) from ground potential, wherein, optionally, said at least one sensing optical fiber (110, 110a, 110n) is routed together with said at least one installed fiber (120) between said HV region (HV1, HV2) and said ground potential and/or between a first HV region (HV1) and a second HV region (HV2).

7. HV equipment (100) according to any of the preceding claims, wherein
said at least one sensing optical fiber (110, 110a, 110n) comprises a plurality of temperature sensitive portions (115, 119a, 119b);
said at least one sensing optical fiber (110, 110a, 110n) is routed along at least a portion of said at least one installed optical fiber (110) so that the plurality of temperature sensitive portions (115, 119a, 119b) is arranged for sensing temperature associated with a plurality of elements of interest.

8. HV equipment (100) according to any of the preceding claims, wherein at least one sensing optical fiber (110, 110a, 110n) comprises a material jacket (110b, 110c), and said material jacket (110b, 110c) comprises a material composition including at least one of, or any combination of:
polypropylene, polyethylene, polyvinylidene fluoride, thermoplastic polyurethane, epoxy, polyester resin, silicon rubber,
wherein, optionally, said material jacket (110b, 110c) comprises a filler material such as a ceramic powder or a flame retardant,
wherein, optionally, said material jacket (110b, 110c) has the same material composition as said element of interest.

9. HV equipment (100) according to any of the preceding claims, wherein said HV equipment (100) is a converter such as a HVDC converter, or an energy storage system, ESS, and said HV region is a region defined by the same or by a component thereof.

10. HV equipment (100) according to any of the preceding claims, comprising a temperature sensor arrangement (200) optically connected to said at least one sensing optical fiber (110, 110a, 110n), preferably at ground potential, which temperature sensor arrangement (200) is configured to determine a temperature associated with said element of interest based on light interaction with said at least one temperature sensitive portion (112, 115, 119a, 119b) of said at least one sensing optical fiber (110),
wherein, optionally, said temperature sensor arrangement (200) is configured to:
emit an optical temperature probing signal (11) into said at least one sensing optical fiber (110);
receive at least one optical response signal (12) reflected or backscattered through said at least one sensing optical fiber (10, 10a, 10n) upon the optical temperature probing signal (11) interacting with at least one of said at least one temperature sensitive portion (112, 115, 119a, 119b), and
determine said temperature associated with said element of interest based on an analysis of said at least one optical response signal (12).

11. HV equipment (100) according to claim 10, wherein said temperature sensor arrangement (200) is configured to:
determine, based on HV equipment information, which particular temperature sensitive portion (112, 115, 119a, 119b) of said at least one temperature sensitive portion (112, 115, 119a, 119b) is associated with said element of interest,
determine, based on a time-of-flight of said at least one optical response signal (12), which particular optical response signal (12) is associated with said particular temperature sensitive portion (112, 115, 119a, 119b), and
determine said temperature associated with said element of interest based on an analysis of said particular optical response signal (12).

12. HV equipment (100) according to any of claims 10-11, wherein said temperature sensor arrangement (200) is configured to determine said temperature associated with said element of interest based on any one of, or any combination of, the following:
Fiber Bragg Grating, FBG, Sensing;
Optical Frequency Domain Reflectometry, OFDR;
Raman Distributed Temperature Sensing, RDTS.

13. HV equipment (100) according to any of claims 10-12, wherein said temperature sensor arrangement (200) is configured to:
compare said temperature of said element of interest with at least one historic temperature of said element of interest to detect a temperature deviation, and/or
compare said temperature with a temperature threshold for said element of interest.

14. Method of installing a sensing optical fiber (110, 110a, 110n) in a high voltage, HV, equipment (100) including at least one HV element (101, ... 108) operating in a HV region (HV1, HV2) of said HV equipment (100) and at least one optical fiber (120) installed within said HV region (HV1, HV2) for providing communication to said at least one HV element (101, ... 108), said method comprising:
arranging (S1) at least one sensing optical fiber (110, 110a, 110n) in the HV equipment (100), each sensing optical fiber (110, 110a, 110n) comprising at least one temperature sensitive portion (112, 115, 119a, 119b) for sensing temperature associated with an element of interest, said element of interest being one of said at least one HV element (101, ... 108) and a portion of said at least one installed optical fiber (120), by routing (S2) it together with said at least one installed optical fiber (120) into said HV region (HV1, HV2),
said at least one sensing optical fiber (110, 110a, 110n) being optically connectable to a temperature sensing arrangement (200) for determining a temperature associated with said element of interest based on light interaction with said at least one temperature sensitive portion (112, 115, 119a, 119b) of said at least one sensing optical fiber (110).

15. Method of monitoring temperature in a high voltage, HV, equipment (100) by means of a temperature sensor arrangement (200), said HV equipment (100) comprising at least one optical fiber (120) installed for communication within said HV equipment (100), said method comprising:
emitting (S1') an optical temperature probing signal (11) into at least one sensing optical fiber (110, 110a, 110n) routed together with said at least one optical fiber (120) into an HV region (HV1, HV2) of said HV equipment (100) for sensing temperature associated with an element of interest via at least one temperature sensitive portion (112, 115, 119a, 119b) of said at least one sensing optical fiber (110, 110a, 110n), said element of interest being one of at least one HV element (101, ... 108) of said HV equipment (100) and at least a portion of said at least one installed optical fiber (120);
receiving (S2') at least one optical response signal (12) reflected or backscattered through said at least one sensing optical fiber (110, 110a, 110n) upon said optical temperature probing signal (11) interacting with at least one of said at least one temperature sensitive portion (112, 115,119a, 119b); and
analyzing said at least one optical response signal (12) to determine a temperature associated with said element of interest,
the method optionally further comprising:
comparing said temperature associated with said element of interest with at least one historic temperature associated with said element of interest to detect a temperature deviation, and/or
comparing said temperature with a temperature threshold for said element of interest,
wherein, optionally, wherein said step of analyzing said at least one optical response signal is based on one of, or any combination of, the following:
Fiber Bragg Grating, FBG, Sensing;
Optical Frequency Domain Reflectometry, OFDR;
Raman Distributed Temperature Sensing, RDTS.
